# EUROPEAN PATENT SPECIFICATION

(11) **EP 2 244 056 B1**
(45) Date of publication and mention of the grant of the patent: **30.11.2016**
(21) Application number: 09710420.2
(22) Date of filing: 04.02.2009
(51) Int. Cl.: G01B 11/04, B60M 1/28, G06T 7/00

(54) **CROSSOVER MEASURING DEVICE**
KREUZUNGSMESSVORRICHTUNG
DISPOSITIF DE MESURE DE CROISEMENT

(30) Priority: 15.02.2008 JP 2008034028
(43) Date of publication of application: 27.10.2010
(73) Proprietor: Meidensha Corporation, Tokyo 141-0032 (JP)
(72) Inventor: WATABE, Yusuke, 141-0032 Tokyo (JP); NIWAKAWA, Makoto, 141-0032 Tokyo (JP)
(74) Representative: Manitz, Finsterwald & Partner GbR
(86) International application number: PCT/JP2009/051844
(87) International publication number: WO 2009/101881

(56) References cited:
- FR-A1- 2 882 973
- FR-A1- 2 883 962
- JP-A- 7 329 615
- JP-A- 11 108 621
- JP-A- H05 278 502
- JP-A- 2002 279 409
- JP-A- 2004 286 500

## Description

### Technical Field

This invention relates to a crossover measuring device, specifically to a device arranged to measure a position of a wiring by an image processing. More specifically, this invention relates to a crossover measuring device arranged to measure a position and a deviation of the crossover.

### Background Art

There is a trolley wire as an equipment of an electric railroad. At a portion at which rails cross, it is necessary to cross trolley wires. Lines which are different from a main line, and which cross each other are referred to as a crossover. The trolley wires installed above the main line and the crossover in a station yard cross each other at a branch point of the rail. Two catenaries are mechanically connected by a crossing clamp, or electrically connected by a connector, so that a special wiring structure is formed. It is necessary that the trolley wire (the main line and the crossover) are laid (set) within a regulation or set height from the rail surface, and within a regulation or set deviation in left and right directions from the center of the track.

However, when the difference in heights of both of the trolley wires crossing each other is varied by the temperature variation of the trolley wire, the boost (upward force) of the pantograph and so on, the trolley wire moves close to a loading gauge or vehicle gauge with respect to the pantograph. The trolley wire and the pantograph may be damaged (hereinafter, preferred to as entanglement). Accordingly, it is necessary to sufficiently monitor a portion at which the trolley wires cross.

The pantograph is mainly used for monitoring the setting (laying) of the trolley wires, and arranged to monitor the heights and the contact points of the trolley wires.

There is, as a measuring means of the pantograph, a special measurement vehicle which is referred to as an inspection vehicle, a loading gauge inspection vehicle or so on. These vehicles are operated at a constant period in between commercial services. A plurality of sensors to measure the inclination of the vehicle body, the deviation of the rail and so on are attached to these measurement vehicles. One of these sensors is a measuring sensor of the pantograph. The pantograph measuring method includes a laser sensor method, an image processing method or so on. These methods have the following characteristics.

1) The laser sensor mainly uses the scan method. The laser is scanned to the pantograph by the mirror. The laser sensor is a sensor to measure the distance to the pantograph by the difference of the positions of the reflection waves, or the variation of the shape of the irradiated laser.
2) The image processing method includes a method to sense the pantograph by a model matching or a pattern matching.

However, these methods can not know the state of the setting of the trolley wires if the pantograph and the trolley wire do not contact each other.

Moreover, in a patent document 1, the center of gravity of the object which does not contact the pantograph is determined, and thereby the three-dimensional position is measured. However, a stereo measurement is performed by using two cameras.
Patent Document 1: Japanese Patent Application Publication No. 2006-250775 "Detecting Device of Obstruction around Pantograph"
Patent Document 2: Japanese Patent Application Publication No. 2002-139305 "Pantograph Obstacle Sensing Device" Document JP H05 278502 A discloses a device with the features recited in the preamble of claim 1.
Document FR 2 882 973 A1 describes to use a discrimination analysis binarizing section to form a binary line sensor image in which the crossover part is emphasized by a discrimination analysis binarization of the line sensor image formed by the line sensor image forming section; a noise removing section to remove the noise of the binary line sensor image to which the discrimination analysis binarization is performed by the discrimination analysis binarizing section; and a crossover part edge detecting section to detect edges of the crossover part in the binary line sensor image from which the noise is removed by the noise removing section.

### Summary of The Invention

The pantograph is mainly used for monitoring the setting of the trolley wire (hereinafter, referred to as the crossover, including the main line) to monitor the height and the contact point of the trolley wire. The measuring methods of the pantograph include the laser sensor method, the image processing method or so on. These methods can not measure the three dimensional position of the crossover if the pantograph and the crossover do not contact each other

Moreover, in the patent document 1, the center of gravity of the object which does not contact the pantograph is determined, and thereby the three-dimensional position is measured. However, the distance and so on of the object is discerned by the stereo measurement. Therefore, the plurality of the cameras are needed.

Furthermore, the patent document 2 discloses that one camera picks up the image of the portion near the pantograph, and thereby the height of the pantograph and the deviation of the trolley wire are measured.

It is an object of the present invention to provide a crossover measuring device to readily measure the height and the deviation of the crossover by the image processing by one camera.

In the present invention, a crossover measuring device comprises: a crossover line sensor installed on a roof of a vehicle to look up a crossover; a pantograph line sensor installed on the roof of the vehicle to direct against a periphery of the pantograph; an illuminating member installed on the roof of the vehicle to illuminate the crossover; a line sensor image forming section to form line sensor images respectively by lining up, in time series, luminance signals obtained by the crossover line sensor and the pantograph line sensor, and to store as input images; a discrimination analysis binarizing section to form a binary line sensor image in which the crossover part is emphasized by a discrimination analysis binarization of the line sensor image formed by the line sensor image forming section; a noise removing section to remove the noise of the binary line sensor image to which the discrimination analysis binarization is performed by the discrimination analysis binarizing section; a crossover part edge detecting section to detect edges of the crossover part in the binary line sensor image from which the noise is removed by the noise removing section; a crossover part height calculating section to determine a width of the crossover part on the image from a distance of the edges of the crossover part which are sensed by the crossover part edge sensing section, and to determine a height of the crossover from a lens focal length, a number of pixels of the sensor of the crossover line sensor, and an image resolving power based on a size data of the crossover; a crossover part deviation calculating section to determine a value of a center of the edges of the crossover which are sensed by the crossover edge sensing section, as a center of gravity of the crossover, and to determine a deviation of the center of the gravity from a center, based on the center of the gravity of the crossover, the installation position of the crossover line sensor, the lens focal length, the sensor width, the number of the pixels of the sensor, and the height of the crossover which is determined by the crossover part height calculating section; a pantograph height and position calculating section to determine a height a,nd a position of the pantograph based on the binary line sensor image from which the noise is removed by the noise removing section, and a design data of the pantograph; and a pantograph and crossover relative position calculating section to determine a relative position between the pantograph and the crossover, based on the height of the crossover which is determined by the crossover part height calculating section, the deviation of the center of the gravity from the center which is determined by the crossover part deviation calculating section, and the height and the position of the pantograph which are determined by the pantograph height and position calculating section.

Moreover, in the crossover measuring device according to the present invention, a sodium lamp is used as the illuminating member; and a band pass filter arranged to transmit only a wavelength of the light emitted from the sodium lamp ins, mounted on the crossover line sensor.

### Brief Description of Drawings

FIG. 1 is a schematic view showing a crossover measuring device according to a basic concept of the present invention.
FIG. 2A is an illustrative view showing a line sensor image (original image) of the crossover.
FIG. 2B is an illustrative view showing a binary line sensor image.
FIG. 3 is an illustrative view showing an edge image of the crossover.
FIG. 4 is an illustrative view showing an edge image in which a center of gravity is sensed.
FIG. 5 is a flowchart showing a crossover measurement according to the basic concept of the present, invention.
FIG. 6 is a block diagram showing the crossover measuring device according to the basic concept of the present invention.
FIG. 7 is a schematic view showing a crossover measuring device according to a third embodiment of the present invention.
FIG. 8 is a flowchart showing a crossover measurement according to the third embodiment of the present invention.
FIG. 9 is a block diagram showing the crossover measuring device according to the third embodiment of the present invention.

### Detailed Description of The Invention

Effects of the basic concept of the present invention are described below.
(1) It is possible to determine a three-dimensional position of the crossover by one camera.
(2) It is possible to perform the operation in the high speed running because of the non-contact method, and to measure a section or interval with a long distance by a short time period.
(3) For the structure of the device, the sensor is installed away from the existing structures such as the point, the air section and the anchor. There is no need to consider the collision with the existing structure. It is possible to continuously measure even at a position at which the existing construction exists.
(4) It is possible to measure by the discrimination analysis binarizing method, irrespective of the strong and the weak of the luminance of the image pickup by the deviation and so on of the crossover.
(5) Basically, it is possible to pick up the line sensor image in the entire sections, and to obtain the image data of the crossover and the existing structures on the ground near the crossover in the measurement section.
(6) There is no need to consider the influence on the human body, relative to the use of the laser beam. The handling is easy.
(7) There is no need to receive the reflected light from the crossover by the regular reflection. Accordingly, there is no burden or botheration to accurately position the light source and the light receiving device.
(8) The line sensor image in the measurement section is recorded. Accordingly, it is possible to check the problematical part of the crossover by checking the image of the problematical part.
(9) It is possible to know whether to position the position at which the crossovers cross, within the regulation position, and to monitor the entanglement of the pantograph.

Moreover, the sodium lamp is used as the illuminating means member. A band pass filter to transmit only the wave length of the light emitted from the sodium lamp is attached to the crossover line sensor. With this, it is possible to remove the ambient or disturbance light such as the outdoor light and the sunlight, to obtain the good image, and to improve the accuracy.

### (1) Basic Concept

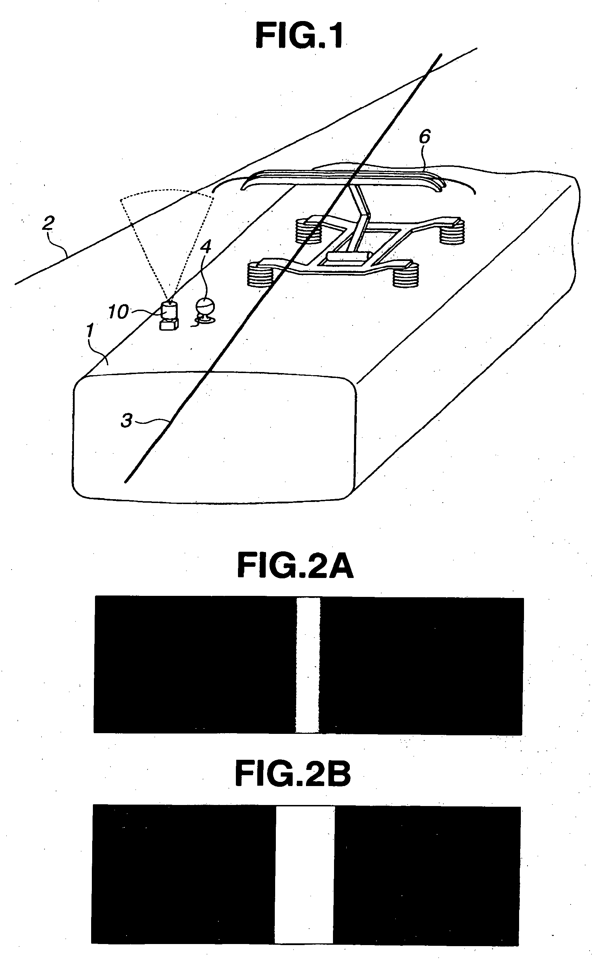

In the present invention, a line sensor is used as an input means of an image, a normal white illumination (light) is used as an illumination. The line sensor is disposed on a roof of an inspection vehicle or examination vehicle) so as to look up in upward vertical direction. The line sensor is disposed so that a scanning line of the line sensor is perpendicular to the running direction of the inspection vehicle, and that the scanning line crosses the crossover (cf. FIG. 1). The luminance signals of the scanning line obtained from the line sensor are lined up in time series so as to form the line sensor image (the planer image). The images are stored as input images. A width of the crossover emerged by the luminance by the image processing is determined in the following manner.

### (1.1) Emphasis of Crossover Part by Binarization

It is necessary to determine a threshold value so as to divide the crossover and a background part. When the threshold value is determined as a fixed value, there are problems that portions other than the crossover are emphasized and extracted by circumstance at an image pickup, or that the crossover itself is not extracted.

Accordingly, a discrimination analysis binarizing method is used for dealing with a deviation of the crossover and a difference of strengths of the reflected light. The discrimination analysis binarizing method is a method of determining the threshold value in accordance with the image. In a histogram in each image, there is "a block of the number of the pixels aggregated by a certain region of the luminance value" (hereinafter, referred to as a class). A relatively good threshold value is determined in any images so that dispersion ratio between the dispersion within the class and the dispersion between the classes as to the background and the pattern region at the binarization is maximized.

By using this method, the binary line sensor image is formed so that the crossover part becomes white, and that then background part becomes black (cf. FIG. 2).

### (1.2) Noise Removal of Binary Line Sensor Image

When the binary line sensor image is formed from the line sensor image by the binarizing operation or binarization, there is a problem that the binary line sensor image includes minute dotted noises by the hurt of the crossover part and the state of the background part.

Therefore, the expansion operation and the contraction operation of the binarization are performed so as to remove these noises.

### (1.3) Detection of Edges of Crossover Part

In the binary line sensor image from which the noises and the existing structures are removed, both side edges of the crossover part represented by the white are sensed. When these edge points are searched in one line from the left, it is possible to sense the point at which the color is varied from the black of the background to the white of the crossover, as the left side edge point of the trolley wire part, and to sense the point at which the color is varied from the white of the trolley wire part to the black of the background, as the right side edge point of the crossover part.

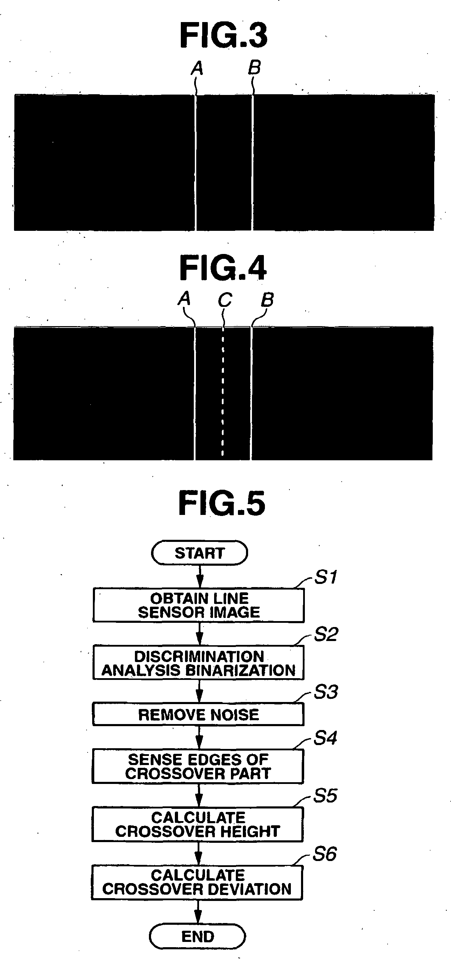

This operation is performed at each line from the upward to the downward of the image so as to sense the edges of the crossover part regarding the one binary line sensor image (cf. FIG. 3).

### (1.4) Calculation of Height of Crossover

A distance between the edge points on the both sides on one scan line of the line sensor is calculated as a width on the image of the crossover part, by using the edge data on the both sides of the crossover part which are sensed from the binary line sensor image.

A size of the set (laid) crossover is known in advance. This information is inputted from the outside. The image resolving power (resolution) [mm/pix] which is a degree of an actual size [mm] with respect to 1 pixel [pix] is calculated from a lens focal length, a sensor width and a number of pixels of the sensor. A height from the line sensor to the crossover is determined.

Moreover, a height from the rail to the line sensor is known in advance. A height from the rail to the crossover is determined by adding the height from the rail to the line sensor.

### (1.5) Calculation of Crossover Deviation

A value of a center of the both side edge data of the crossover part which are sensed from the binary line sensor image is set to a center of gravity of the crossover (cf. FIG. 4).

An amount of the deviation of the center of gravity from the center is determined from the position [pix] of the center of gravity and an installation position of the line sensor on the image, the lens focal length, the sensor width, the number of the pixels of the sensor, and the height of the crossover which is determined in (1.4).

Thus-determined edge data, data of the crossover part, the line sensor image used in the calculation, the corresponding line number and so on are recorded.

In the present invention, it is possible to determine "the height and the deviation" (hereinafter, referred to as a three-dimensional position) of the crossover which does not contact the pantograph, by one camera by non-contact. Moreover, it is possible to use in the high speed running, and to measure a section with a long distance by a short time period.

Moreover, because of the structure of the device, the sensor is provided at a position away from the existing structures such as a point, an air section and an anchor. Accordingly, there is no need to consider the collision with the existing structures. Basically, it is possible to take the line sensor image in entire sections. It is possibl.e to obtain the image data of the crossover and the existing structures on the ground near the crossover in the measurement section.

Moreover, there is no difficultly of the handling by using the laser beam so as to consider the influence on the human body.

Furthermore, there is no burden to accurately position between the light source and the light receiving device.

Moreover, in any image pickup circumstance, it is possible to automatically calculate the relatively good threshold value. It is possible to improve the phenomenon that the trolley wire is not extracted due to the low luminance when the threshold value is constant. Moreover, the line sensor image is remained as the data. Accordingly, it is possible to check the problematical portion of the crossover by checking the image of the problematical portion.

### (2) Use of Sodium Lamp and Band Pass Filter

This is a method of illuminating the crossover by using the sodium lamp in place of the normal white illumination.

Moreover, a band pass filter to transmit only a wave length emitted from the sodium lamp light is installed on the camera lens of the line sensor.

With this, it is possible to capture only the sodium lamp light reflected from the crossover, to remove the ambient light including the outdoor light and the sunlight, to obtain a good image, and to improve the accuracy.

### (3) Measurement of Relative Position between Crossover and Pantograph

An important item for checking the setting or laying of the crossover is an entanglement of the pantograph. The crossover contacts and crosses a horn part of the pantograph. It is necessary that the crossover is set within the regulation value so as not to generate the entanglement.

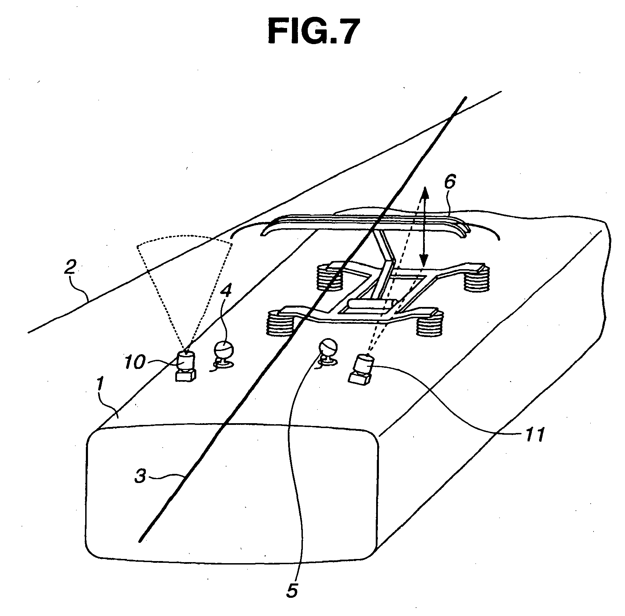

Accordingly, a line sensor and so on is installed to direct against the pantograph (cf. FIG. 7), so that the height of the pantograph is measured in addition to the three-dimensional position of the crossover. It is possible to estimate the three-dimensional position of the pantograph from the measured height of the pantograph and the design drawing of the pantograph.

Furthermore, it is characteristic to monitor whether to position the position at which the pantograph and the crossover cross, within the regulation position, by knowing the relative position between the three-dimensional estimated position of the pantograph and the three-dimensional position of the crossover.

### First Embodiment

Hereinafter, embodiments according to the present invention are illustrated in detail with reference to drawings.

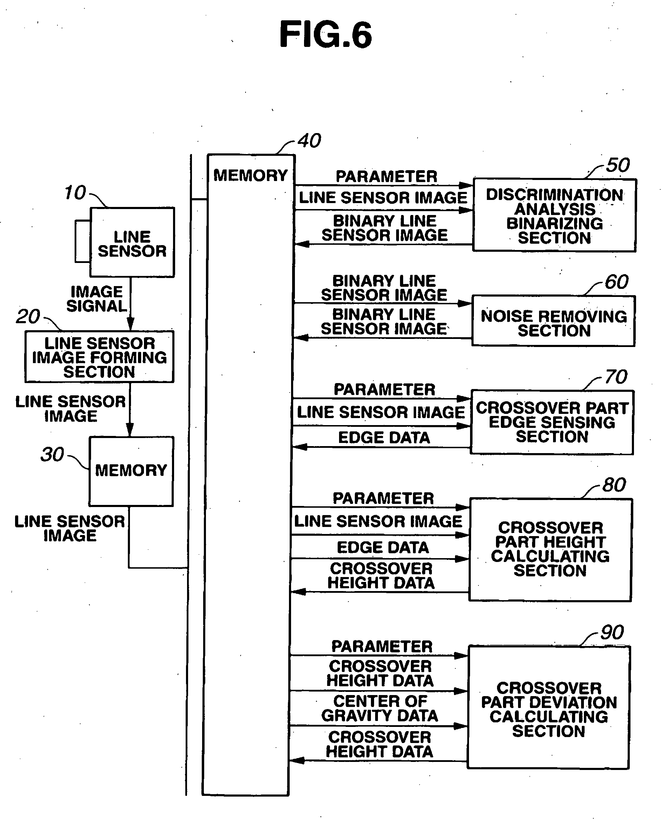

FIGS. 1 to 6 show a first embodiment according to the present invention. FIG. 1 is a schematic view showing a crossover measuring device according to a basic concept of the present invention. FIG. 2A is an illustrative view showing a line sensor image (original image) of the crossover. FIG. 2B is an illustrative view showing a binary (binarized) line sensor image. FIG. 3 is an illustrative view showing an edge image of the crossover. FIG. 4 is an illustrative view showing the edge image in which the center of gravity is sensed. FIG. 5 is a flowchart of the crossover measurement according to the basic concept of the present invention. FIG. 6 is a block diagram showing the crossover measuring device according to the basic concept of the present invention.

As shown in FIG. 1, the crossover line sensor 10 is installed on the roof of the vehicle 1 to look up the crossover 2. Moreover, a white light 4 to illuminate the crossover 2 is installed on the roof of the vehicle 1. On the roof of the vehicle 1, the pantograph 6 is installed in addition to the crossover line sensor 10 and the white light 4. The pantograph 6 contacts the main line (wire) 3.

As shown in FIG. 6, the crossover measuring device according to this embodiment includes a crossover line sensor 10, a line sensor image forming section 20, memories 30 and 40, a discrimination analysis binarizing section 50, a noise removing section 60, a crossover part edge sensing section 70, a crossover part height calculating section 80 and a crossover part deviation calculating section 90. The operation proceeds in accordance with the flowchart shown in FIG. 5.

First, the line sensor image forming section 20 lines up, in time series, the image signals (luminance signals of the scanning line) of the crossover 2 which are obtained by the crossover line sensor 10 to form the line sensor image, and stores as the input image (step S1).

Next, when the discrimination analysis binarizing section 50 binarizes the line sensor image formed by the line sensor image forming section 20, the discrimination analysis binarizing section 50 determines a relatively good threshold value in accordance with the image by the discrimination analysis binarization, and emphasizes the crossover (step S2). For example, in the line sensor image (original image), shadings (light and dark) are generated in the crossover part, as shown in FIG. 2A. On the other hand, in the binary line sensor image, the crossover part is white, and the background part is black, as shown in FIG. 2B.

Next, the noise removing section 60 removes the noise of the binary line sensor image binarized by the discrimination analysis binarizing section 50 (step S3).

Moreover, the crossover part edge sensing section 70 senses the edges on the both sides of the crossover part which are represented by the white on the binary line sensor image from which the noise is removed by the noise removing section 60 (step S4). For example, as shown in FIG. 3, a point at which the color varies from the black of the background to the white of the crossover part is sensed as a left side edge point A of the trolley wire part, and a point at which the color varies from the white of the crossover part to the black of the background is sensed as a right side edge point B of the crossover part.

The crossover part height calculating section 80 calculates a distance between the edge points A and B on the both sides on one scanning line of the line sensor 10, as a width of the image of the crossover part. The crossover part height calculating section 80 calculates an image resolution (resolving power) [mm/pix] which is a degree of an actual size [mm] with respect to one pixel [pix], from the size data of the crossover, the lens focal length, the sensor width and the number of the pixels of the sensor which are known in advance, and determines the height from the line sensor 10 to the crossover 2 (step S5).

Then, as shown in FIG. 4, the crossover part deviation calculating section 90 sets a value of a center of the edge data on the both sides of the crossover part which are sensed from the binary line sensor image, to the position C of the center of gravity of the crossover. The crossover part deviation calculating section 90 determines an amount of the deviation of the position C of the center of gravity from the center, from the position [pix] of the center of gravity and the installation position of the line sensor on the image, the lens focal length, the sensor width, the number of the pixels of the sensor, and the height of the crossover 2 which is determined at step S5 (1.4) (step S6).

As illustrated above, the crossover measuring device according to this embodiment includes a means (the line sensor image forming section 20) for forming the line sensor image by using the line sensor 10, and storing as the input image, a means (the discrimination analysis binarizing section 50) for emphasizing the crossover of the input line sensor image by the discrimination analysis binarization, a means (the noise removing section 60) for removing the noise of the binary line sensor image, a means (the crossover part edge sensing section 70) for sensing the edges of the crossover, a means (the crossover part height calculating section 80) for calculating the height of the crossover, and a means (the crossover part deviation calculating section 90) for calculating the deviation of the crossover. It is possible to calculate the deviation of the three-dimensional position of the crossover.

### Second Embodiment

In the crossover measuring device according to this embodiment, the sodium lamp is used in place of the normal white lamp 4 used in the first embodiment. The band pass filter to transmit only the wave length emitted from the sodium lamp is installed on the camera lens of the line sensor 10. The other structures are identical to those of the first embodiment.

Accordingly, this embodiment makes it possible to attain the effects identical to the first embodiment. Moreover, only the light of the sodium lamp reflected from the crossover is caught. It is possible to remove the ambient light including the outdoor light and the sunlight, to obtain the good image, and thereby to improve the accuracy.

### Third Embodiment

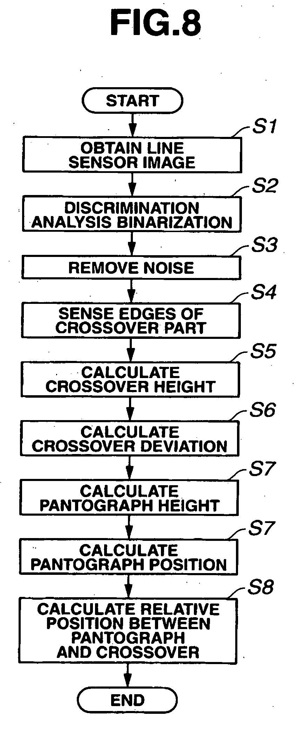

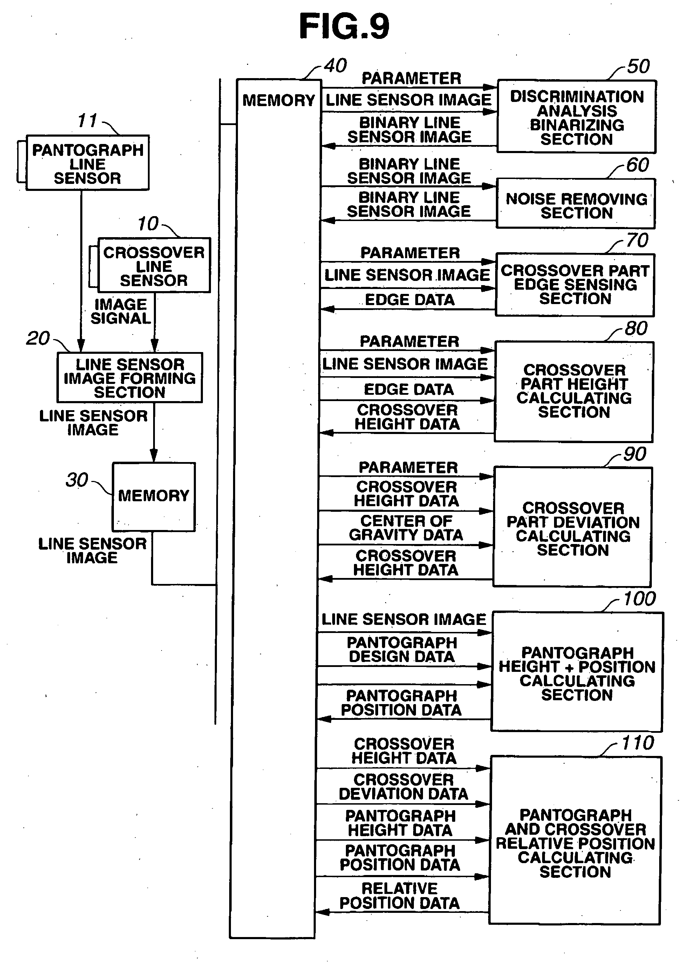

FIGS. 7 to 9 show a third embodiment of the present invention. FIG. 7 is a schematic view showing a crossover measuring device according to a third embodiment of the present invention. FIG. 8 is a flowchart showing a crossover measurement according to the third embodiment of the present invention. FIG. 9 is a block diagram showing the crossover measuring device according to the third embodiment of the present invention.

In this embodiment, as shown in FIG. 7, the pantograph line sensor 11 is installed on the roof of the vehicle 1 to direct the periphery of the pantograph 6, in addition to the first embodiment. Moreover, the illuminating lamp 5 to illuminate the pantograph 6 is installed on the roof of the vehicle 1. The other structures are identical to the first embodiment.

In the crossover measuring device according to this embodiment, as shown in FIG. 9, the pantograph height and position calculating section 100 and the pantograph and crossover relative position calculating section 110 are added in addition to the first embodiment. The operation proceeds in accordance with the flowchart shown in FIG. 8.

First, the line sensor image forming section 20 lines up, in time series, the image signals (the luminance signals of the scanning line) of the crossover 2 which are obtained by the crossover line sensor image 10 to form the line sensor image, and lines up, in time series, the image signals (the luminance signals of the scanning line) of the pantograph 6 which are obtained by the pantograph line sensor 11 to form the line sensor image. The line sensor image forming section 20 stores these input images (step S1).

Step S2 to Step S6 are identical to those of the first embodiment.

Next, the pantograph height and position calculating section 100 measures the height of the pantograph 6, based on the binary line sensor image which is obtained by the pantograph line sensor 11, which is formed as the line sensor image, and from which the noise is removed. Moreover, the pantograph height and position calculating section 100 calculates the three-dimensional position of the pantograph 6 from the measured height of the pantograph 6 and the design data of the pantograph 6 (step S7).

Moreover, the pantograph and crossover relative position calculating section 110 determines the relative position between the pantograph and the crossover, based on the height of the crossover which is determined by the crossover part height calculating section 80, the deviation of the center of gravity from the center which is determined by the crossover part deviation calculating section 90, and the height and the position of the pantograph which are determined by the pantograph height and position calculating section 100 (step S8).

In this way, the crossover measuring device according to this embodiment makes it possible to attain the effects identical to the first embodiment. In this embodiment, a means (the pantograph line sensor 11) for taking the image of the pantograph 6, a means (the pantograph height and position calculating section 100) for calculating the height of the pantograph, and estimating the three-dimensional position of the pantograph from the design drawing of the pantograph, and a means (the pantograph and crossover relative position calculating section 110) for determining the relative position between the crossover 2 and the pantograph 6 are added to the crossover measuring device according to the first embodiment. It is possible to monitor whether to position a position at which the pantograph and the crossover cross, within the regulation position by knowing the relative position between the three-dimensional estimated position of the pantograph 6 and the three-dimensional position of the crossover 2.

The crossover measuring device according to the present invention can be widely used as a device to measure the position of the wiring by the image processing, specifically, the height and the deviation of the crossover.

## Claims

1. A crossover measuring device comprising:
a crossover line sensor (10) adapted to be installed on a roof of a vehicle to look up a crossover;
a pantograph line sensor (11) adapted to be installed on the roof of the vehicle to direct against a periphery of t.h-e pantograph;
an illuminating member (4, 5) adapted to be installed on the roof of the vehicle to illuminate the crossover;
a line sensor image forming section (20) to form line sensor images respectively by lining up, in time series, luminance signals obtained by the crossover line sensor and the pantograph line sensor, and to store as input images;
a crossover part height calculating section (80),
**characterized in that**
the crossover part height calculating section is adapted to determine a width of the crossover part on the image from a distance of the edges of the crossover part which are sensed by the crossover part edge sensing section, and to determine a height of the crossover from a lens focal length, a number of pixels of the sensor of the crossover line sensor, and an image resolving power based on a size data of the crossover; and
**in that** the crossover measuring device further comprises:
a discrimination analysis binarizing section (50) to form a binary line sensor image in which the crossover part is emphasized by a discrimination analysis binarization of the line sensor image formed by the line sensor image forming section;
a noise removing section (60) to remove the noise of the binary line sensor image to which the discrimination analysis binarization is performed by the discrimination analysis binarizing section;
a crossover part edge detecting section (70) to detect edges of the crossover part in the binary line sensor image from which the noise is removed by the noise removing section;
a crossover part deviation calculating section (90) to determine a value of a center of the edges of the crossover which are sensed by the crossover edge sensing section, as a center of gravity of the crossover (C), and to determine a deviation of the center of the gravity from a center, based on the center of the gravity of the crossover, the installation position of the crossover line sensor, the lens focal length, the sensor width, the number of the pixels of the sensor, and the height of the crossover which is determined by the crossover part height calculating section;
a pantograph height and position calculating section (100) to determine a height and a position of the pantograph based on the binary line sensor image from which the noise is removed by the noise removing section, and a design data of the pantograph; and
a pantograph and crossover relative position calculating section (110) to determine a relative position between the pantograph and the crossover, based on the height of the crossover which is determined by the crossover part height calculating section, the deviation of the center of the gravity from the center which is determined by the crossover part deviation calculating section, and the height and the position of the pantograph which are determined by the pantograph height and position calculating section.

2. The crossover measuring device as defined in claim 1, wherein a sodium lamp is used as the illuminating member (4, 5); and a band pass filter arranged to transmit only a wavelength of the light emitted from the sodium lamp is mounted on the crossover line sensor.

## Patentansprüche

1. Kreuzungsmessvorrichtung, umfassend:
einen Kreuzungszeilensensor (10), der zur Installation an einem Dach eines Fahrzeugs angepasst ist, um zu einer Kreuzung hinaufzusehen;
einen Stromabnehmerzeilensensor (11), der zur Installation an dem Dach des Fahrzeugs angepasst ist, so dass er gegen einen Umfang des Stromabnehmers gerichtet ist;
ein Beleuchtungselement (4, 5), das zur Installation an dem Dach des Fahrzeugs angepasst ist, um die Kreuzung zu beleuchten;
einen Abschnitt (20) zur Bildung eines Zeilensensorbildes, um Zeilensensorbilder jeweils durch in Zeitreihe erfolgendes Aufstellen von Luminanzsignalen, die von dem Kreuzungszeilensensor und dem Stromabnehmerzeilensensor erhalten werden, zu bilden und als Eingangsbilder zu speichern;
einen Abschnitt (80) zur Berechnung einer Kreuzungsteilhöhe,
**dadurch gekennzeichnet, dass**
der Abschnitt zur Berechnung der Kreuzungsteilhöhe angepasst ist, eine Breite des Kreuzungsteils an dem Bild aus einer Distanz der Ränder des Kreuzungsteils zu bestimmen, die von dem Abschnitt zur Erfassung des Kreuzungsteilrandes erfasst sind, und um eine Höhe der Kreuzung aus einer Linsenbrennweite, einer Anzahl von Pixeln des Sensors des Kreuzungszeilensensors und einer Bildauflösungsleistung basierend auf Größendaten der Kreuzung zu bestimmen; und
dass die Kreuzungsmessvorrichtung ferner umfasst:
einen Diskriminanzanalysebinarisierungsabschnitt (50), um ein Binärzeilensensorbild zu bilden, bei dem das Kreuzungsteil durch eine Diskriminanzanalysebinarisierung des Zeilensensorbildes hervorgehoben ist, das durch den Abschnitt zur Bildung eines Zeilensensorbildes gebildet ist;
einen Rauschentfernungsabschnitt (60), um das Rauschen des Binärzeilensensorbildes zu entfernen, an dem die Diskriminanzanalysebinarisierung durch den Diskriminanzanalysebinarisierungsabschnitt ausgeführt wird;
einen Abschnitt (70) zur Detektion eines Kreuzungsteilrandes, um Ränder des Kreuzungsteils in dem Binärzeilensensorbild zu detektieren, von dem das Rauschen durch den Rauschentfernungsabschnitt entfernt ist;
einen Abschnitt (90) zur Berechnung einer Kreuzungsteilabweichung, um einen Wert eines Mittelpunkts der Ränder der Kreuzung, die von dem Kreuzungsranderfassungsabschnitt erfasst sind, als einen Schwerpunkt der Kreuzung (C) zu bestimmen und eine Abweichung des Schwerpunkts von einem Mittelpunkt basierend auf dem Schwerpunkt der Kreuzung, der Installationsposition des Kreuzungszeilensensors, der Linsenbrennweite, der Sensorbreite, der Anzahl der Pixel des Sensors und der Höhe der Kreuzung zu bestimmen, die von dem Abschnitt zur Berechnung einer Kreuzungsteilhöhe bestimmt ist;
einen Abschnitt zur Berechnung einer Stromabnehmerhöhe und - position (100), um eine Höhe und eine Position des Stromabnehmers basierend auf dem Binärzeilensensorbild, von dem das Rauschen durch den Rauschentfernungsabschnitt entfernt ist, und Konstruktionsdaten des Stromabnehmers zu bestimmen; und
einen Abschnitt (110) zur Berechnung einer relativen Position des Stromabnehmers und der Kreuzung, um eine relative Position zwischen dem Stromabnehmer und der Kreuzung basierend auf der Höhe der Kreuzung, die von dem Abschnitt zur Berechnung einer Kreuzungsteilhöhe bestimmt ist, der Abweichung des Schwerpunkts von dem Mittelpunkt, der von dem Abschnitt zur Berechnung einer Kreuzungsteilabweichung bestimmt ist, und der Höhe und der Position des Stromabnehmers zu bestimmen, die von dem Abschnitt zur Berechnung der Höhe und Position des Stromabnehmers bestimmt sind.

2. Kreuzungsmessvorrichtung nach Anspruch 1, wobei eine Natriumlampe als das Beleuchtungselement (4, 5) verwendet ist; und ein Bandpassfilter, der so angeordnet ist, nur eine Wellenlänge des von der Natriumlampe emittierten Lichts zu übertragen, an dem Kreuzungszeilensensor montiert ist.

## Revendications

1. Dispositif de mesure de croisement comprenant :
un capteur de ligne de croisement (10) adapté à être installé sur une toiture d'un véhicule pour rechercher un croisement ;
un capteur de ligne de pantographe (11) adapté à être installé sur la toiture du véhicule et dirigé contre une périphérie du pantographe ;
un élément d'illumination (4, 5) adapté à être installé sur la toiture du véhicule pour illuminer le croisement ;
une section de formation d'image à capteur en ligne (20) pour former des images de capteur en ligne respectivement en alignant, dans des séries temporelles, des signaux de luminance obtenus par le capteur de ligne de croisement et le capteur de ligne de pantographe, et pour les stocker à titre d'images entrées ;
une section de calcul de hauteur de parties de croisement (80),
**caractérisé en ce que**
la section de calcul de hauteur de parties de croisement est adaptée à déterminer une largeur de la partie de croisement sur l'image depuis une distance des bordures de la partie de croisement qui sont détectées par la section de détection de bordures de parties de croisement, et déterminer une hauteur du croisement à partir d'une longueur focale d'une lentille, d'un nombre de pixels du capteur de ligne de croisement,
et d'une puissance de résolution d'image en se basant sur des données de taille du croisement ; et
**en ce que** le dispositif de mesure de croisement comprend en outre :
une section de binarisation et d'analyse de discrimination (50) pour former une image de capteur en ligne binaire dans laquelle la partie de croisement est soulignée par une binarisation et d'analyse de discrimination de l'image du capteur en ligne formée par la section de formation d'image de capteur en ligne ;
une section de suppression de bruit (60) pour supprimer le bruit de l'image du capteur en ligne binaire sur laquelle la binarisation et l'analyse de discrimination sont exécutées par la section de binarisation et d'analyse de discrimination ;
une section de détection de bordures de parties de croisement (70) pour détecter les bordures de la partie de croisement dans l'image du capteur en ligne binaire de laquelle le bruit a été supprimé par la section de suppression de bruit ;
une section de calcul de déviation de parties de croisement (90) pour déterminer une valeur d'un centre des bordures du croisement qui sont détectées par la section de détection de bordure de croisement, à titre de centre de gravité du croisement (C), et pour déterminer une déviation du centre de gravité par rapport à un centre, basé sur le centre de gravité du croisement, sur la position d'installation du capteur de ligne de croisement, sur la longueur focale de la lentille, sur la largeur du capteur, sur le nombre de pixels du capteur, et sur la hauteur du croisement qui est déterminée par la section de calcul de hauteur de parties de croisement ;
une section de calcul de hauteur et de position (100) de pantographe pour déterminer une hauteur et une position du pantographe en se basant sur l'image du capteur en ligne binaire de laquelle le bruit a été supprimé par la section de suppression de bruit, et sur des données de conception du pantographe ; et
une section de calcul de position relative du pantographe et du croisement (110) pour déterminer une position relative entre le pantographe et le croisement, sur la base de la hauteur du croisement qui est déterminée par la section de calcul de hauteur de parties de croisement, sur la déviation du centre de gravité depuis le centre qui est déterminée par la section de calcul de déviation de parties de croisement, et sur la hauteur et la position du pantographe qui sont déterminées par la section de calcul de hauteur et de position du pantographe.

2. Dispositif de mesure de croisement selon la revendication 1, dans lequel une lampe au sodium est utilisée à titre d'élément d'illumination (4, 5) et un filtre passe-bande agencé pour transmettre uniquement une longueur d'onde de la lumière émise par la lampe au sodium est montée sur le capteur de ligne de croisement.
